# EUROPÄISCHE PATENTSCHRIFT

(11) **EP 0 395 913 B1**
(45) Veröffentlichungstag und Bekanntmachung des Hinweises auf die Patenterteilung: **23.08.1995**
(21) Anmeldenummer: 90106733.0
(22) Anmeldetag: 07.04.1990
(51) Int. Cl.: H04N 9/04

(54) **Einrichtung zur Bildaufnahme**
Image pickup device
Dispositif de prise d'image

(30) Priorität: 03.05.1989 DE 3914577
(43) Veröffentlichungstag der Anmeldung: 07.11.1990
(73) Patentinhaber: ROBERT BOSCH GMBH, 70442 Stuttgart (DE)
(72) Erfinder: Bock, Gerd, Dr., D-3200 Hildesheim (DE)
(74) Vertreter: Friedmann, Jürgen, Dr.-Ing.

(56) Entgegenhaltungen:
- EP-A- 0 083 240
- PATENT ABSTRACTS OF JAPAN, Band 10, Nr. 279 (E-439)[2335], 20. September 1986; & JP-A-61 098 073
- PATENT ABSTRACTS OF JAPAN, Band 7, Nr. 21 (E-155)[1166], 27. Januar 1983; & JP-A-57 178 491
- PATENT ABSTRACTS OF JAPAN, Band 11, Nr. 81 (E-488)[2528], 12. März 1987; & JP-A-61 236 282

## Beschreibung

Die Erfindung geht aus von einer Einrichtung zur Bildaufnahme nach der Gattung des Hauptanspruchs.

Für Videokameras sind Halbleiter-Bildsensoren bekannt geworden (sogenannte CCD-Sensoren), bei welchen eine Vielzahl von lichtempfindlichen Sensorelementen rasterförmig angeordnet ist. Durch die der Abbildung des jeweils aufzunehmenden Gegenstandes entsprechende Belichtung wird in jedem Sensorelement eine Ladung während der Belichtungszeit aufintegriert und am Ende dieser Integrationszeit als Videosignal abgetastet. Bezüglich ihrer Eigenschaften, insbesondere der die Auflösung bestimmenden Zahl der Sensorelemente, sind die bekannten Halbleiter-Bildsensoren auf Videokameras ausgerichtet. Dabei wurden Kompromisse zwischen sich teilweise widersprechenden Anforderungen eingegangen. Insbesondere ist bei den bekannten Halbleiter-Bildsensoren die Zahl der Sensorelemente mit Rücksicht auf technologische Möglichkeiten, Herstellungskosten und Größe der Sensoren begrenzt.

Für verschiedene Anwendungen reicht jedoch die mit den bekannten Halbleiter-Bildsensoren erzielbare örtliche Auflösung nicht aus. Dieses sind jedoch häufig Anwendungen, bei welchen stehende bzw. sich nur langsam bewegende Gegenstände aufgenommen werden, so daß eine Bewegungsauflösung nur eine untergeordnete Rolle spielt.

Aus der EP-A-0 083 240 ist ein Halbleiter-Bildsensor mit rasterförmig angeordneten CCD-Sensorelementen bekannt. Bei der Aufnahme eines Bildes wird die Abbildung auf dem Halbleiter-Bildsensor von Integrationszeit zu Integrationszeit um einen Bruchteil eines Rastermaßes verschoben. Dabei beträgt die Verschiebung ein halbes Rastermaß in horizontaler und vertikaler Richtung. Die Verschiebung wird dadurch erreicht, daß der Bildsensor mittels eines piezoelektrischen Wandlers bewegt wird.

Aus JP-A-57 178 491 ist eine Bildaufnahmeeinheit bekannt, die mittels eines Filterrades, das ein Bild in Spektralbereiche aufteilt, ein Farbvideosignal für eine geradzahlige und eine ungeradzahlige Abtastung erstellt. Die Viedeosignale der geradezahligen und der ungeradzahligen Abtastungen gleicher Farbe werden miteinander kombiniert, um ein Rahmenbild einer Farbe zu erhalten. Ein Gesamtbild wird aus den Rahmenbildern dreier verschiedener Farben gebildet.

Aus der JP-A-61 236 282 ist eine Fernsehkamera bekannt, die zwischen einer Linse und einem Bildaunfnahmeelement eine planparallele, transparente Platte aufweist. Mit Hilfe einer geeigneten Rotation und Vibration der transparenten Platte wird die Auflösung des Bildaufnahmeelementes 12 erhöht.

Die vorliegenden Erfindung stellt in vorteilhafter Weise eine Einrichtung zur Verfügung, die ein möglichst einfaches Verfahren zur Aufnahme von Farbbildern ermöglicht.

Die erfindungsgemäße Einrichtung mit den Merkmalen des Hauptanspruchs hat den Vorteil, daß selbst für hohe örtliche Auflösungen preiswerte auf dem Markt erhältliche Halbleiter-Bildsensoren genutzt werden können.

Durch die in den Unteransprüchen aufgeführten Maßnahmen sind vorteilhafte Weiterbildungen und Verbesserungen der im Hauptanspruch angegebenen Erfindung möglich. Insbesondere ist eine vorteilhafte Weiterbildung durch die Anwendung eines Filterrades gegeben, wobei nacheinander Abbildungen verschiedener Farbauszüge auf dem Halbleiter-Bildsensor und danach eine Verschiebung der folgenden Abbildungen erfolgt.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung eines Ausführungsbeispiels,
- Fig. 2: ebenfalls schematisch die Ansicht eines Halbleiter-Bildsensors,
- Fig. 3: eine Darstellung des zeitlichen Ablaufs der Signalerzeugung bei dem Ausführungsbeispiel,
- Fig. 4: zwei verschiedene Halbleiter-Bildsensoren und deren geometrischer Aperturfrequenzgang,
- Fig. 5: Frequenzgänge von Nutzsignalen und Alias-Störungen bei einer bekannten Bildaufnahmevorrichtung und bei der erfindungsgemäßen,
- Fig. 6: ein Blockschaltbild einer ersten Signalverarbeitungsschaltung für die erfindungsgemäße Bildaufnahmeeinrichtung,
- Fig. 7: eine Darstellung eines in der Schaltungsanordnung nach Fig. 6 verwendeten Speichers und
- Fig. 8: eine weitere Schaltung zur Signalverarbeitung für eine erfindungsgemäße Bildaufnahmeeinrichtung.

Gleiche Teile sind in den Figuren mit gleichen Bezugszeichen versehen.

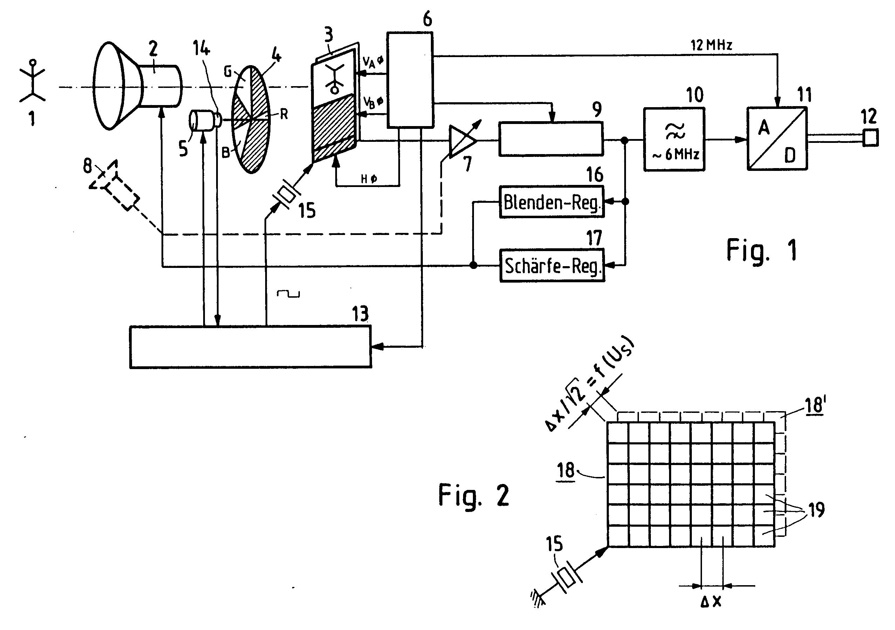

Bei dem Ausführungsbeispiel nach Fig. 1 wird ein Objekt 1 mit Hilfe eines Objektivs 2 auf die lichtempfindliche Fläche eines Halbleiter-Bildsensors 3 abgebildet. Im Strahlengang zwischen dem Objektiv 2 und dem Halbleiter-Bildsensor 3 befindet sich ein Filterrad 4, das von einem Motor 5 in Pfeilrichtung gedreht wird. Das Filterrad 4 wird bezüglich der Drehzahl und der Phasenlage starr mit einem Takt verkoppelt, der neben den zum Betrieb des Halbleiter-Bildsensors 3 erforderlichen Taktsignalen HPHI, VAPHI und VBPHI in einem Taktgenerator 6 erzeugt wird.

Das vom Halbleiter-Bildsensor 3 erzeugte Signal enthält zeitsequentiell im Rhythmus der Habbilderzeugung die Farbwertsignale G, R und B. Dieses Signal wird in einem Verstärker 7 verstärkt, wobei der Verstärkungsfaktor zur Anpassung an wechselnde Licht-Farbtemperaturen steuerbar ist. So kann beispielsweise der Verstärkungsfaktor von einem Signal eines Weißsensors 8 gesteuert werden.

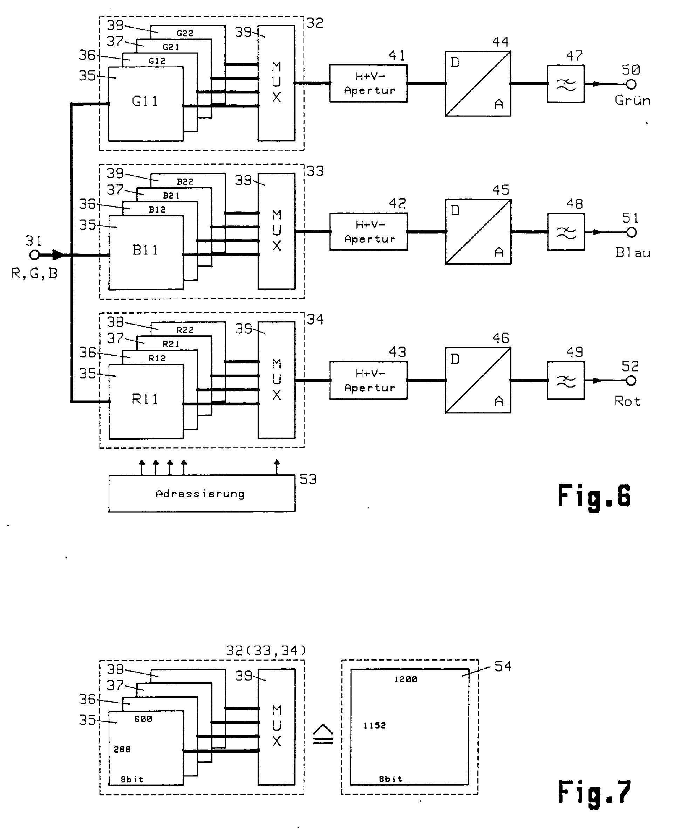

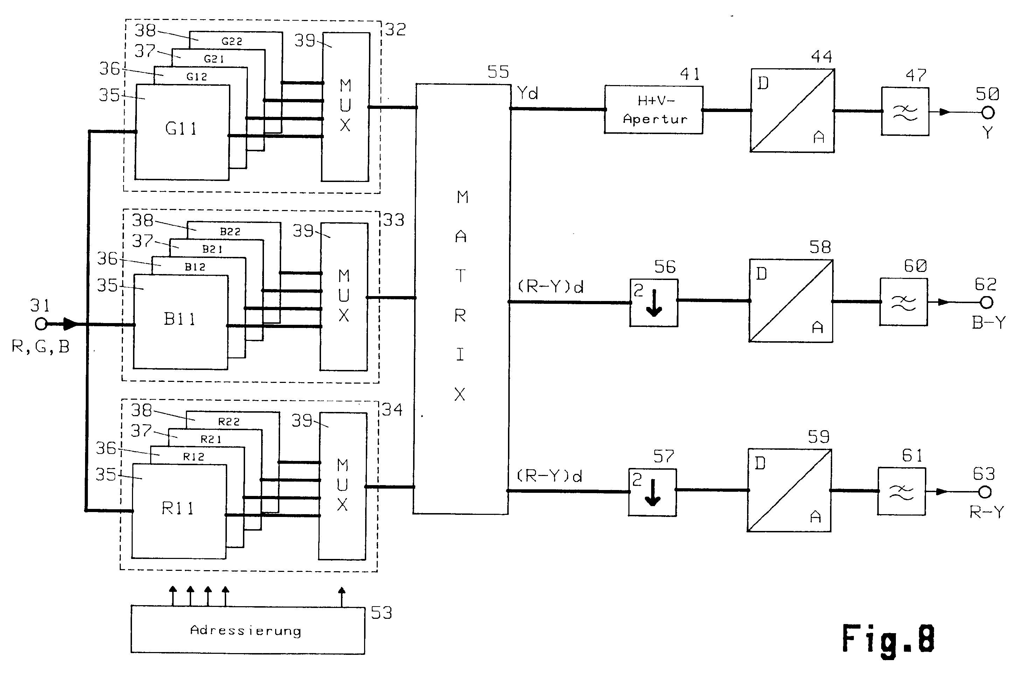

An den Verstärker 7 schließen sich eine Schaltung 9, die im wesentlichen zur Gradationsvorverzerrung dient, ein Tiefpaß 10 und ein Analog/Digital-Wandler 11 an. Der Tiefpaß 10 ist in an sich bekannter Weise zur Vermeidung von Alias-Störungen bei der Analog/Digital-Wandlung erforderlich. Da die drei Signale G, R und B als Multiplexsignal vorliegen, ist im Gegensatz zu einer dreikanaligen Farbfernsehkamera jede der Schaltungen 7, 9, 10 und 11 nur einmal erforderlich. Das digitale Signal kann einem Ausgang 12 des Analog/Digital-Wandlers 11 entnommen in einer der Schaltungen nach Fig. 6 und 8 weiterverarbeitet werden.

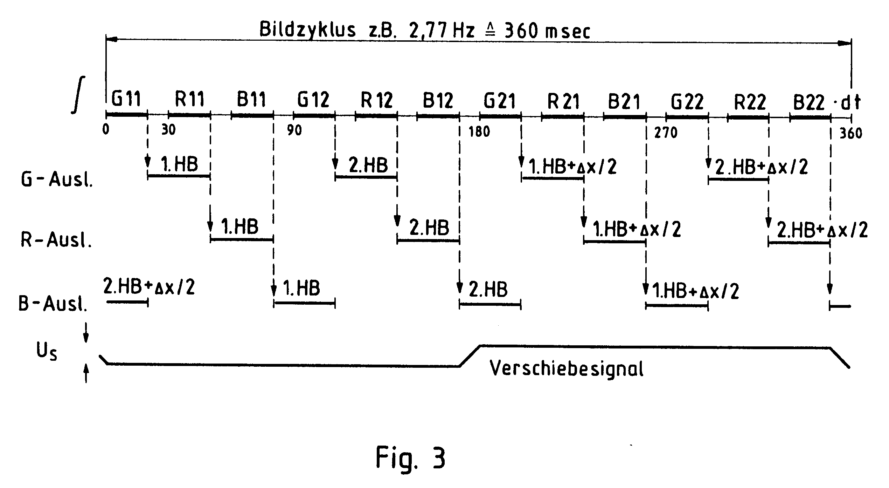

Eine von dem Taktgeber 6 synchronisierte Steuerschaltung 13 steuert die Drehzahl des Motors 5, wozu in an sich bekannter Weise von einem Winkelgeber 14 eine Rückmeldung an die Steuerschaltung 13 erfolgt. Außerdem gibt die Steuerschaltung 13 mäanderförmige Impulse an einen piezoelektrischen Wandler 15 ab, welcher den Halbleiter-Bildensor periodisch verschiebt, was im Zusammenhang mit den Figuren 2 und 3 näher erläutert wird. An sich bekannte Schaltungen 16, 17 zur Blendenregelung und zur Schärferegelung leiten aus den Videosignalen Stellsignale ab, die entsprechenden Stellgliedern des Objektivs zugeführt werden.

Fig. 2 stellt schematisch die lichtempfindliche Fläche 18 eines Halbleiter-Bildsensors dar, wobei die Anzahl der Sensorelemente gegenüber üblichen Halbleiter-Bildsensoren der Übersichtlichkeit halber stark verringert ist. Der Abstand jeweils zweier Sensorelemente beträgt Delta x. Durch die Wirkung des piezoelektrischen Wandlers 15 wird der Halbleiter-Bildsensor in Richtung der Diagonalen der Sensorelemente 19 jeweils um Delta x/√2 verschoben. Dadurch ergeben sich abwechselnd die mit 18 und 18′ bezeichneten Lagen der lichtempfindlichen Fläche. Da das Objektiv 2 (Fig. 1) fest angeordnet ist, ergibt sich somit eine Verschiebung der Abbildung auf dem Halbleiter-Bildsensor. Anstelle der Bewegung des Halbleiter-Bildsensors kann jedoch auch eine entsprechende Ablenkung der Lichtstrahlen erfolgen, was beispielsweise dadurch möglich ist, daß ein meistens ohnehin erforderliches Infrarotfilter periodisch um einen vorgegebenen Winkel gekippt wird.

Fig. 3 stellt die zeitliche Abfolge dar, nach welcher die Belichtung des Halbleiter-Bildsensors, das Auslesen der Signale und die Verschiebung des Halbleiter-Bildsensors erfolgen. Dabei wird ein Filterrad vorausgesetzt, welches jeweils 60°-Sektoren aufweist, die für die Farbauszüge Grün (G), Rot (R) und Blau (B) durchlässig sind. Dazwischen liegen Sektoren von jeweils 30°, die nicht lichtdurchlässig sind.

Bei der in Fig. 3 dargestellten Folge wird ferner eine Umdrehungszahl des Filterrades von 2,77 Hz vorausgesetzt. Danach wird zunächst für einen Zeitraum von 20 ms der Halbleiter-Bildsensor mit dem grünen Farbauszug belichtet. Während der nachfolgenden unbelichteten Zeit von 10 ms und der Belichtung mit dem roten Farbauszug erfolgt das Auslesen des Signals G für das erste Halbbild. Nach der Belichtung mit dem Rotauszug R11 wird das entsprechende Signal ausgelesen und gleichzeitig nach einer unbelichteten Zeit der Halbleiter-Bildsensor mit dem Blauauszug belichtet, dessen Signal für das erste Halbbild danach folgend ausgelesen wird. Nachdem Signale des ersten Halbbildes ausgelesen sind, erfolgt in der gleichen Reihenfolge die Belichtung mit G12, R12 und B12 sowie das Auslesen der entsprechenden Signale, die das zweite Halbbild bilden.

Während der bisher erfolgten zwei Umdrehungen hat das Verschiebesignal U_{S} den ersten von zwei vorgesehenen Werten eingenommen. In den beiden folgenden Umdrehungen des Filterrades nimmt das Verschiebesignal U_{S} den anderen Pegel ein, so daß der Halbleiter-Bildsensor entsprechend Fig. 2 verschoben wird. Während dieser beiden Umdrehungen erfolgt zunächst jeweils eine Belichtung mit G21, R21 und B21 und das Auslesen der entsprechenden Signale, die wiederum ein erstes Halbbild ergeben, das horizontal und vertikal um Delta x/2 verschoben ist, und danach eine Belichtung mit G22, R22 und B22, woraus sich das zweite Halbbild ergibt, das ebenfalls um Delta x/2 verschoben ist. Der gesamte Zyklus dauert bei dem dargestellten Ausführungsbeispiel 360 ms.

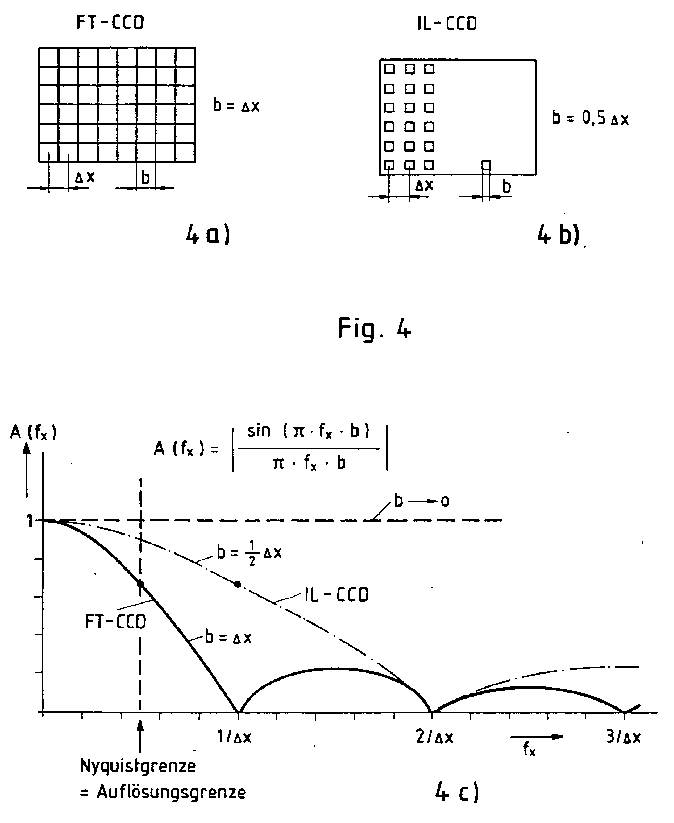

Fig. 4 verdeutlicht die Begrenzung der Auflösung durch die rasterförmige Struktur der Halbleiter-Bildsensoren. Dazu ist in Fig. 4a schematisch die lichtempfindliche Fläche eines sogenannten Frame-transfer-Sensors (FT-CCD) dargestellt, bei dem die Sensorelemente aneinander anstoßen. Fig. 4b zeigt einen sogenannten Interline-Bildsensor (IL-CCD), bei dem zwischen den Sensorelementen Verbindungsleitungen bzw. Verschiebezellen geführt sind, so daß die Kantenlänge b der Sensorelemente kleiner - beispielsweise die Hälfte - als das Rastermaß Delta x ist.

Fig. 4c zeigt den geometrischen Aperturfrequenzgang A(fₓ) für Frame-transfer-Bildsensoren (durchgezogene Linie), für Interline-Bildsensoren (strichpunktierte Linie) und für einen Bildsensor, bei welchem die Kantenlänge der Sensorelemente gegen 0 geht. Bei dem Frame-transfer-Bildsensor ergibt sich eine erste Nullstelle bei 1/Delta x, während bei dem Interline-Bildsensor die erste Nullstelle bei 2/Delta x liegt. Im Falle von unendlich kleinen Sensorelementen geht die Frequenz fₓ der ersten Nullstelle gegen unendlich. Die senkrechte gestrichelte Linie stellt die Nyquistgrenze dar, welche mit der Auflösungsgrenze zusammenfällt und bei einer Frequenz von 1/2 Delta x für alle Sensortypen gleicher Sensorelementezahlen liegt.

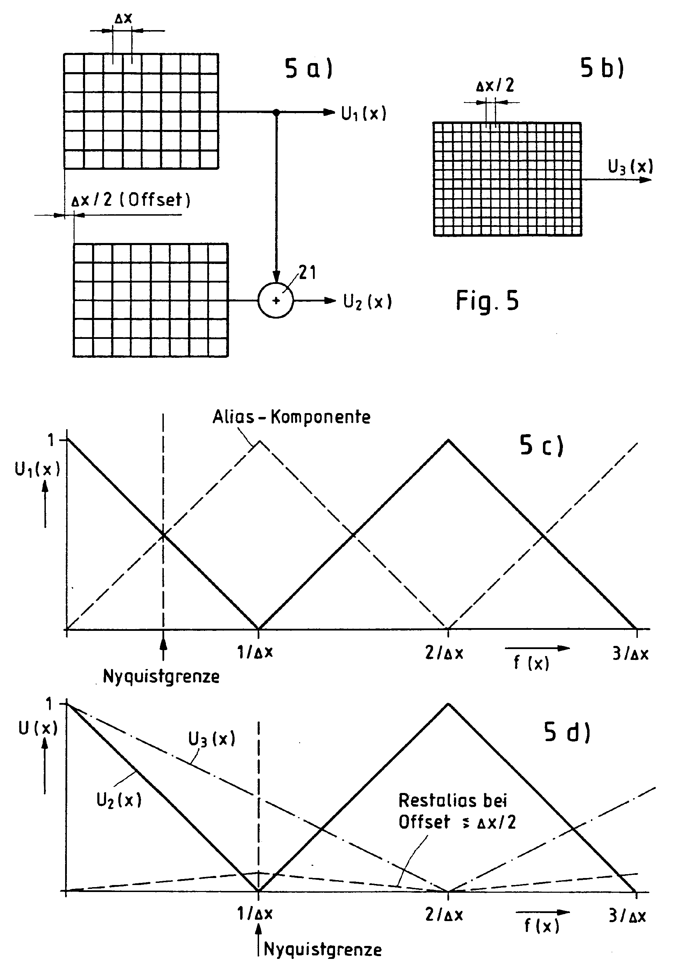

Bei der Nyquistgrenze liegt die Modulationstiefe der Signale des Interline-Bildsensors zwar höher als beim Frame-transfer-Bildsensor, die Verschiebung der ersten Nullstelle kann infolge der kleineren Sensorelementabmessungen jedoch grundsätzlich nicht genutzt werden, da bei einer Nutzung des Bereichs oberhalb der Nyquistgrenze Alias-Störungen auftreten. Diese Zusammenhänge werden im folgenden anhand der Fig. 5 näher erläutert, wobei Fig. 5a zwei gemäß der Erfindung verschobene Abbildungen eines Frame-transfer-Bildsensors darstellt, deren Ausgangssignale in einer Addierschaltung 21 überlagert werden. Fig. 5b stellt schematisch einen Frame-transfer-Bildsensor mit je Richtung verdoppelter Sensorelementezahl dar. Fig. 5c zeigt Nutzsignalkomponenten z. B. mit einem dreieckförmigen Ortsfrequenzgang (durchgezogene Linie) und Alias-Komponenten (gestrichelte Linie) als Funktion der Frequenz f(x) im Falle des Ausgangssignals U₁ eines nicht verschobenen Halbleiter-Bildsensors.

Das Diagramm gemäß Fig. 5c besagt beispielsweise, daß bei einer Abbildung einer Struktur, die rechts von der Nyquistgrenze liegt, die links von der Nyquistgrenze durch die gestrichelte Linie dargestellten Alias-Komponenten auftreten. Aus Fig. 5d geht hervor, daß durch die erfindungsgemäßen Maßnahmen die Nyquistgrenze auf 1/Delta x heraufgesetzt ist und daß sich geringe Rest-Alias-Störungen im Nutzfrequenzbereich ergeben, wenn der Offset nicht exakt dem halben Rastermaß entspricht. Ferner ist ersichtlich, daß die Modulationstiefe bei einem Bildsensor mit (je Richtung) doppelter Sensorelementezahl [U₃(x)] zwar größer als bei der entsprechenden Verwendung zweier Frame-transfer-Bildsensoren [U₂(x)] mit einer Verschiebung um (Delta x)/2 ist, jedoch keine höhere Nyquistgrenze (und damit nutzbare Ortsauflösung) erreicht wird. Die für die x-Ortsfrequenz geltenden Aussagen sind sinngemäß auf die y-Ortsfrequenz übertragbar.

Fig. 6 zeigt ein Blockschaltbild einer ersten Signalverarbeitungsschaltung. Dabei sind für die Signale R, G, B, die dem Eingang 31 zugeführt werden, Speichereinheiten 32, 33, 34 vorgesehen, die jeweils aus vier Speichern 35, 36, 37, 38 bestehen. Diese Speicher dienen jeweils zur Speicherung eines Halbbildes des entsprechenden Farbwertsignals. So sind in der Speichereinheit 32 Speicher für die Farbwertsignale G11, G12, G21 und G22 vorgesehen, während die Speichereinheit 33 Speicher für die Farbwertsignale B11, B12, B21 und B22 umfaßt. Schließlich enthält die Speichereinheit 34 Speicher für die Farbwertsignale R11, R12, R21 und R22.

Mit Hilfe eines Multiplexers 39 können aus den Speichern 35 bis 38 die jeweils erforderlichen Signale ausgelesen werden und über eine der Aperturschaltungen 41, 42, 43 je einem Digital/Analog-Wandler 44, 45, 46 zugeführt werden, dessen analoge Ausgangssignale über einen Tiefpaß 47, 48, 49 zu den Ausgängen 50, 51, 52 geleitet werden. Eine Schaltung 53 dient zur Adressierung der Speicher 35 bis 38 und zur Steuerung der Multiplexer 39. Die Adressierung der Speicher bzw. die Steuerung der Multiplexer 39 erfolgt derart, daß sich die nacheinander für jeweils ein Halbbild erzeugten, gegeneinander verschobenen Bildelemente zu jeweils einem fortlaufend ausgelesenen Halbbild ergänzen.

Fig. 7 dient der weiteren Erläuterung der Speichereinheiten 32 bis 34. Für eine angenommene Größe des Halbleiter-Bildsensors von 600 * 576 Bildelementen ist eine Kapazität jeweils eines Speichers von 600 * 286 Bildelementen zu jeweils 8 bit erforderlich. Durch die vertikale und horizontale Verschiebung des Halbleiter-Bildsensors ergibt sich in beiden Richtungen eine Verdoppelung der Zahl der Bildelemente. Berücksichtigt man ferner den vertikalen Versatz beider Halbbilder, so ergibt sich eine Kapazität jeweils einer Speichereinheit 32 bis 34 von 1152 * 2200 Bildelementen zu jeweils 8 bit, was in Fig. 7 bei 54 angedeutet ist. Dieses entspricht der Auflösung der an den Ausgängen 50 bis 52 anstehenden Ausgangssignale.

Während bei der Signalverarbeitungsschaltung nach Fig. 6 analoge Farbwertsignale mit erhöhter Auflösung zur Verfügung stehen, werden mit Hilfe der Signalverarbeitungsschaltung nach Fig. 8 ein Leuchtdichtesignal Y und zwei Farbdifferenzsignale (B-Y) und (R-Y) erzeugt. Bezüglich der Speichereinheiten 32 bis 34 und der Adressierung 53 gleicht die Signalverarbeitungsschaltung nach Fig. 8 derjenigen nach Fig. 6. Die Ausgangssignale der Speichereinheiten 32 bis 34 werden jedoch einer Matrixschaltung 55 zugeführt, an deren Ausgängen ein digitales Leuchtdichtesignal Yd und digitale Farbdifferenzsignale (B-Y)d und (R-Y)d anliegen. Nach einer Apertur-Korrekturschaltung 41 und einem Digital/Analog-Wandler 44 wird das analoge Leuchtdichtesignal Y über einen Tiefpaßfilter 47 zum Ausgang 50 geleitet.

Die digitalen Differenzsignale werden nach einer Halbierung der Abtastrate bei 56 und 57 Digital/Analog-Wandlern 58, 59 zugeführt, deren Ausgangssignale nach der üblichen Tiefpaßfilterung bei 60 und 61 an Ausgängen 62 und 63 zur Verfügung stehen. Bei der Signalverarbeitungsschaltung nach Fig. 8 ist es ferner möglich, die digitalen Ausgangssignale der Apertur-Korrekturschaltung 41 und der Abtastratenwandler 56, 57 als Ausgangssignale zu verwenden, um beispielsweise ein sogenanntes 4:2:2-Komponentensignal zu erzeugen.

## Patentansprüche

1. Einrichtung zur Bildaufnahme, wobei die jeweils aufzunehmenden Gegenstände auf einem Halbleiterbildsensor mit rasterförmig angeordneten Sensorelementen abgebildet werden und die in den Sensorelementen entstehenden Ladungen nach Ablauf einer Integrationszeit als Videosignale ausgelesen werden, wobei die Abbildung auf dem Halbleiterbildsensor (3) von Integrationszeit zu Integrationszeit zyklisch um einen Bruchteil des Rastermaßes verschoben wird, dadurch gekennzeichnet, daß die Abbildung der aufzunehmenden Gegenstände auf dem Halbleiterbildsensor (3) jeweils nacheinander in mehreren Farbauszügen erfolgt, daß für jeden Farbauszug eine Integration der Ladungen und ein Abtasten vorgesehen sind, und daß jeweils nach dem Abtasten aller Farbauszüge eine Verschiebung der Abbildung erfolgt.

2. Einrichtung nach Anspruch 1, dadurch gekennzeichnet, daß von Integrationszeit zu Integrationszeit jeweils eine Verschiebung um ein halbes Rastermaß in horizontaler und vertikaler Richtung erfolgt.

3. Einrichtung nach Anspruch 1, dadurch gekennzeichnet, daß für die Ableitung der Farbauszüge ein Filterrad (4) vorgesehen ist und daß abwechselnd bei einer ersten Umdrehung des Filterrades (4) die Abbildung in einer ersten Lage und bei einer zweiten Umdrehung die Abbildung in einer zweiten Lage erfolgt.

4. Einrichtung nach Anspruch 1, dadurch gekennzeichnet, daß der Halbleiter-Bildsensor (3) verschiebbar angeordnet ist.

5. Einrichtung nach Anspruch 4, dadurch gekennzeichnet, daß zur Verschiebung des Halbleiter-Bildsensors ein piezoelektrischer Wandler (15) vorgesehen ist.

6. Einrichtung nach Anspruch 1, dadurch gekennzeichnet, daß im Strahlengang zwischen einem Objektiv und dem Halbleiter-Bildsensor eine optische Ablenkeinrichtung vorgesehen ist.

7. Einrichtung nach Anspruch 6, dadurch gekennzeichnet, daß die optische Ablenkvorrichtung von einer um einen vorgegebenen Winkel kippbaren Filterscheibe gebildet ist.

8. Einrichtung nach Anspruch 1, dadurch gekennzeichnet, daß für diejenigen digitalen Videosignale, welche durch jeweils einen Auslesevorgang des Halbleiter-Bildsensors entstehen, ein Speicher (35, 36, 37, 38) vorgesehen ist, und daß die gespeicherten digitalen Signale aus den Speichern (35, 36, 37, 38) derart auslesbar sind, daß Abtastwerte zweier durch Verschiebung der Abbildung entstehender Bilder bzw. Halbbilder zeitlich verschachtelt werden.

## Claims

1. Image pick-up device, the objects respectively to be recorded being imaged on a semiconductor image sensor having sensor elements arranged in the form of a matrix, and the charges produced in the sensor elements being read out as video signals after the expiry of an integration time, the imaging on the semiconductor image sensor (3) being cyclically displaced from integration time to integration time by a fraction of the pitch, characterized in that the imaging of the objects to be recorded is performed on the semiconductor image sensor (3) sequentially in each case in a plurality of colour separations, in that integration of the charges and sampling are provided for each colour separation, and in that a displacement of the image is performed in each case after sampling of all the colour separations.

2. Device according to Claim 1, characterized in that a displacement by half a pitch in the horizontal and vertical directions is performed in each case from integration time to integration time.

3. Device according to Claim 1, characterized in that a filter wheel (4) is provided for deriving the colour separations, and in that in an alternating fashion imaging is performed in a first position during a first revolution of the filter wheel (4), and imaging is performed in a second position during a second revolution.

4. Device according to Claim 1, characterized in that the semiconductor image sensor (3) is displaceably arranged.

5. Device according to Claim 4, characterized in that a piezoelectric transducer (15) is provided for displacing the semiconductor image sensor.

6. Device according to Claim 1, characterized in that an optical deflecting device is provided in the beam path between a lens and the semiconductor image sensor.

7. Device according to Claim 6, characterized in that the optical deflecting device is formed by a filter disc which can be tilted by a prescribed angle.

8. Device according to Claim 1, characterized in that a memory (35, 36, 37, 38) is provided for those digital video signals which are respectively produced by a readout operation of the semiconductor image sensor, and in that the stored digital signals can be read out of the memories (35, 36, 37, 38) in such a way that sampled values of two images or fields produced by displacing the image are temporally interleaved.

## Revendications

1. Dispositif de prise d'image dans lequel les objets donnent une image sur un capteur d'image à semiconducteurs dont les éléments capteurs sont répartis suivant une forme de grille et qui lisent comme signaux vidéo les charges formées dans les éléments capteurs, à la fin d'un temps d'intégration, l'image sur le capteur d'image à semi-conducteurs (3) étant décalée d'une durée d'intégration à l'autre, de manière cyclique, d'une fraction de la dimension de la grille, caractérisé en ce que l'image de l'objet sur le capteur d'image à semiconducteurs (3) se fait successivement suivant plusieurs extraits de couleurs et pour chaque extrait de couleurs, il y a une intégration des charges et une détection et en ce qu'après la détection de tous les extraits de couleurs, l'image est décalée.

2. Dispositif selon la revendication 1, caractérisé en ce que d'une durée d'intégration à l'autre il y a chaque fois un décalage d'une demi-dimension de la grille dans la direction horizontale et dans la direction verticale.

3. Dispositif selon la revendication 1, caractérisé en ce que pour obtenir les extraits de couleurs, il est prévu une roue de filtre (4) et en ce qu'en alternance, au cours d'une première rotation de la roue de filtre (4), on a l'image dans une première position et pour une seconde rotation, l'image est dans une seconde position.

4. Dispositif selon la revendication 1, caractérisé en ce que le capteur d'image à semi-conducteurs (3) est monté coulissant.

5. Dispositif selon la revendication 4, caractérisé en ce que pour décaler le capteur d'image à semiconducteurs il est prévu un convertisseur piézo-électrique (15).

6. Dispositif selon la revendication 1, caractérisé en ce que dans le chemin des rayons entre un objectif et le capteur d'image à semi-conducteurs il est prévu un dispositif de déflexion optique.

7. Dispositif selon la revendication 6, caractérisé en ce que le dispositif de déflexion optique est formé par une plaque de filtre susceptible d'être basculée d'un angle prédéterminé.

8. Dispositif selon la revendication 1, caractérisé en ce que pour les différents signaux vidéo numériques qui correspondent chaque fois à une opération de lecture du capteur d'image à semi-conducteurs, il est prévu une mémoire (35, 36, 37, 38) et les signaux numériques mis en mémoire peuvent être lus dans les mémoires (35, 36, 37, 38) pour que les valeurs de détection de deux images ou trames formées par le décalage de l'image soient imbriquées dans le temps.
